# EUROPEAN PATENT APPLICATION

(11) **EP 4 455 877 A1**
(43) Date of publication of application: **30.10.2024**
(21) Application number: 23212335.6
(22) Date of filing: 27.11.2023
(51) Int. Cl.: G06F 9/50, G06F 9/48

(54) **ADAPTIVE SCHEDULER FOR LOAD BALANCING OF UNPREDICTABLE, TIME-SENSITIVE REQUESTS FOR A SHARED RESOURCE**

(30) Priority: 27.04.2023 US 202318140257
(71) Applicant: Rockwell Collins, Inc., Cedar Rapids, IA 52498 (US)
(72) Inventor: PEIFFER, Benjamin, Cedar Rapids, IA 52402 (US)
(74) Representative: Dehns

(57) **Abstract**

A resource allocation system receives user requests for system resources over time. The system records factors such as number of resource requests, total usage time, etc., and preempts earlier requests in favor of later requests based on those factors. The resource allocation system tracks metrics in real-time and establishes dynamic preemption thresholds based on usage over time. Preemption thresholds may be specific to individual users.

## Description

### BACKGROUND

Traditionally, a radio system includes a radio and corresponding antenna; the radio dictates what energy is emitted or received from the antenna. In more modern systems, radios may be software-defined and send digital signals to an antenna that then converts that signal to an analog signal and pushes it out of the actual physical antenna. Recent developments in multi-function radio-frequency (RF) systems encourage resource sharing through an intermediary resource manager. When implementing such a system, it is important to ensure the equitable and timely distribution of resources to users. Currently, the resource manager assigns users to resources immediately when a request is received.

In an RF system, the demand for resources has to happen at a very specific time. The time critical nature of RF system has driven such systems to serve every request at the exact time that it is received. This first-come, first-served matching does not facilitate a globally optimized resource allocation. Because the resource manager cannot control the order in which requests are received, it tends to favor users that make requests in advance of when the resources are needed.

It would be advantageous to have a system and method for allocating resources among users in a globally balanced way.

### SUMMARY

In one aspect, embodiments of the inventive concepts disclosed herein are directed to a resource allocation system that receives user requests for system resources over time. The system records factors such as number of resource requests, total usage time, etc., and preempts earlier requests in favor of later requests based on those factors.

In a further aspect, the resource allocation system tracks metrics in real-time and establishes dynamic preemption thresholds based on usage over time.

In a further aspect, preemption thresholds may be specific to individual users.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a block diagram view of a system according to an exemplary embodiment;
FIG. 2 shows a graph of user resource requests according to an exemplary embodiment;
FIG. 3 shows a flowchart of a method according to an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

**As** used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a resource allocation system that receives user requests for system resources over time. The system records factors such as number of resource requests, total usage time, etc., and preempts earlier requests in favor of later requests based on those factors. The resource allocation system tracks metrics in real-time and establishes dynamic preemption thresholds based on usage over time. Preemption thresholds may be specific to individual users.

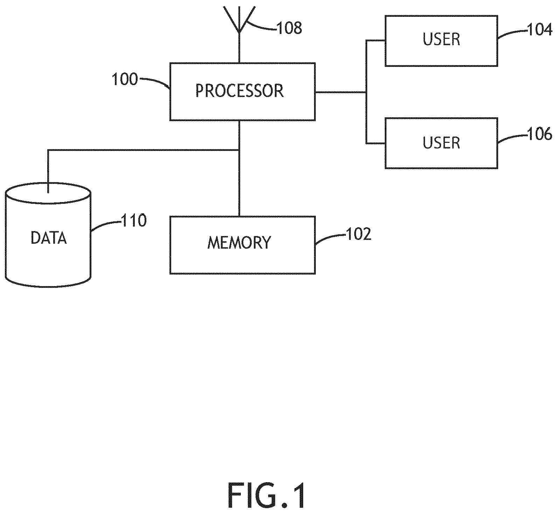

Referring to FIG. 1, a block diagram view of a system according to an exemplary embodiment is shown. The system includes a processor 100 and memory 102 storing processor executable code to configure the processor 100. The processor 100 receives resource request from each of a plurality of users 104, 106 (such as avionics systems) to utilize a shared resource such as an antenna 108 or radio system.

**The** processor 100 records aspects of each resource request and stores those aspects in a data storage device 110. Aspects of each resource request may include the number of access requests from the requesting user 104, 106 over a period of time, the proportion of successful requests from the requesting user 104, 106 over a period of time, the amount of time (duration) a resource is allocated to a user 104, 106 over a period of time, a regularity of access requests from the requesting user 104, 106 over a period of time, and the like.

In at least one embodiment, when resource access requests collide (separate users 104, 106 request access to an asset for the same time) the processor 100 applies a function or machine learning algorithm to decide if the first access request should be preempted. Preemption allows a later access request to take priority over an earlier access request by cancelling a prior allocation to the earlier user 104, 106.

Furthermore, in some scenarios, there may be a disparity in access requests and the time such access is actually required by a user 104, 106. In at least one embodiment, some users 104, 106 may request to schedule future access windows when data transmission / reception actually needs to happen. Such time gap between the request to schedule and the actual access time may be a function of the regularity of the requesting user 104, 106. For example, a radar system may request regular access times based on a desired refresh rate of a radar image. The radar system can schedule access to the antenna 108 well in advance, and therefore would always be the first access request for a given time period. However, it may be appreciated that in many cases, a slight delay to a radar imaging cycle would have a slight or negligible impact on system performance. By comparison, a second user 104, 106 operating just-in-time or in response to some unpredictable event may periodically request access to the antenna 108, and always or almost always be the second requester for a given time period. The preemption determination (either via a function or machine learning algorithm) may include a metric defined by the disparity between request time and execution time of each request with regularly requested accesses having a relatively wide disparity between request time and access time being disfavored.

In at least one embodiment, the preemption determination receives metrics or aspects associated with the users 104, 106, recorded over time, and determines if an earlier requesting user 104, 106 should be preempted to impose some balance between the users 104, 106 with respect to accessing the requested resources (such as the antenna 108). In at least one embodiment, the act of preemption may itself be recorded as a metric for future determinations.

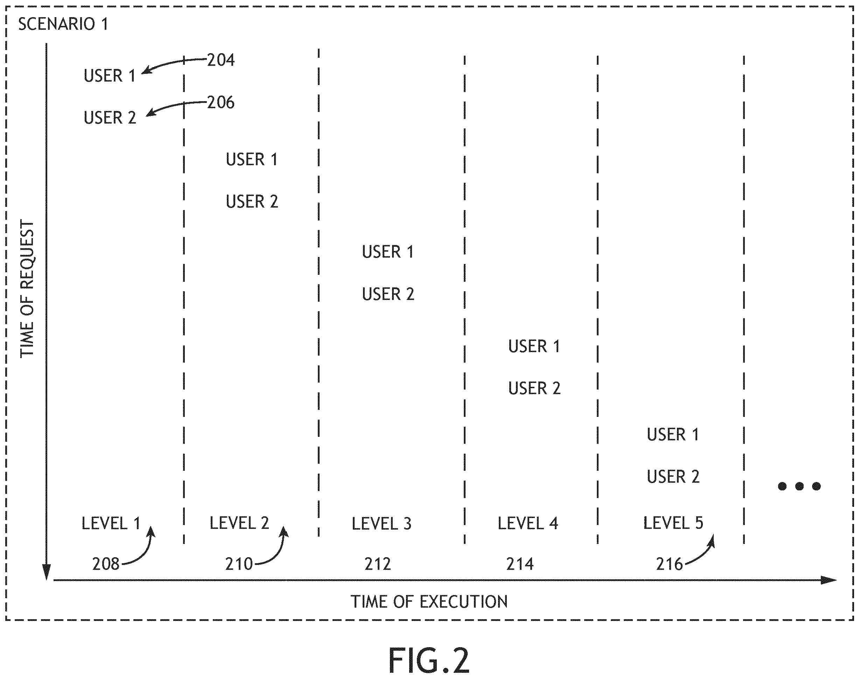

Referring to FIG. 2, a graph of user resource requests according to an exemplary embodiment is shown. In one exemplary scenario, two users 204, 206 send similar requests to a resource manager at various times 208, 210, 212, 214, 216. Because the request from the first user 204 arrives first, it will always be allocated the resource. Later, when the request from the second user 206 arrives, a collision occurs. It is important to note that requests from the first user 204 are independent and asynchronous, so although is this scenario a second user request always follows a user request, the resource manager cannot predict that a second user request is eminent, and denying a first user request would risk dead time in the resource schedule.

Over time, the resource manager may record various metrics about the users 204, 206 and their respective access requests and actual resource utilization. At some time 208, 210, 212, 214, 216, the resource manager may allocate the resource to the first user 204 and subsequently whether to preempt that allocation to the first user 204 and replace it with an allocation to the second user 206. The resource manager may then also attempt to reschedule the first user request. In at least one embodiment, the resource manager may record the act of preemption as a metric in future determinations.

**The** determination may utilize real-time statistics that describe the utilization of the resources and the distribution of the resources to the users 204, 206. Such statistics may be reset periodically so that the resource manager can optimize performance under a highly dynamic environment. Alternatively, or in addition, the age of various datapoints may be a metric in the determination such that old datapoints effectively roll-off over time. The statistics collected will provide the basis for an objective state (i.e., the proportion of requests that have been successfully executed to those that have been requested overall) and a user state (i.e., the proportion of a user's requests that have been successfully executed to those that have been requested overall be that user204, 206).

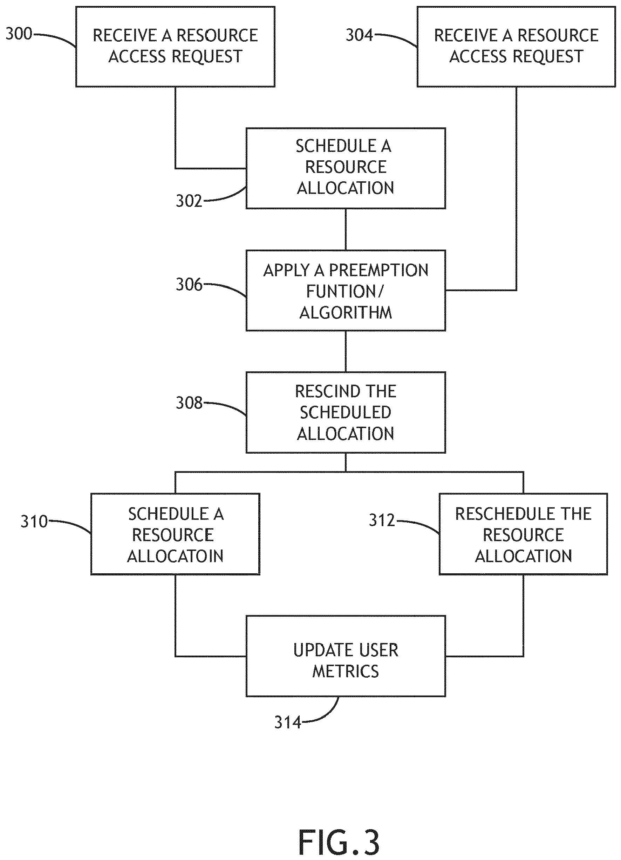

Referring to FIG. 3, a flowchart of a method according to an exemplary embodiment is shown. A resource manager receives 300 a first access request for a managed resource and schedules 302 an allocation for that resource to the first user. Subsequently, but before the first user actually uses the resource, the resource manager receives 304 a second access request for the managed resource to allocate the resource at the same time as the first allocation.

**The** resource manager applies 306 a preemption algorithm to determine if the first allocation should be preempted in favor of the second requested allocation to facilitate a usage balance between multiple users. In at least one embodiment, the preemption algorithm may record each incidence of a user request and each incidence of a user allocation. When an absolute value of user allocations or a ratio of user allocations to user requests for the second user falls below a threshold, the resource manager may rescind 308 the first allocation and schedule 310 the second. Alternatively, or in addition, when the resource manager determines that the value or ratio has fallen below a threshold, the resource manager may sample a random variable to determine if the first allocation should be rescinded 308. In any event, the resource manager may update 314 the recorded metrics (i.e. increment recorded allocation numbers).

In at least one embodiment, the resource manager may determine if subsequent time window is available for the first user and reschedule 312 the allocation for the first user. The resource manager may communicate preemptions and rescheduling to the first user.

In at least one embodiment, the resource manager may compare total requests and allocations for the resource to requests and allocations for a specific user. If a specific user has worse request to allocation metrics than the total for all users, the resource manager may reduce the preemption threshold for that user. Conversely, the preemption threshold may be increased is specific user metrics are better. It may be appreciated that the preemption threshold may be specific for each user.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The forms herein before described being merely explanatory embodiments thereof, it is the intention of the following claims to encompass and include such changes. Furthermore, any of the features disclosed in relation to any of the individual embodiments may be incorporated into any other embodiment.

## Claims

1. A computer apparatus comprising:
at least one processor (100) in data communication with a memory storing processor; executable code for configuring the at least one processor (100) to:
receive a resource allocation request from a first user;
schedule a resource allocation for the first user;
receive a resource allocation request from a second user;
determine if the second user is associate with one or more resource allocation metrics below a predefined threshold;
rescind the resource allocation for the first user; and
schedule a resource allocation for the second user.

2. The computer apparatus of Claim 1, wherein the at least one processor (100) is further configured to record resource allocation metrics for each of the first user and second user over time.

3. The computer apparatus of Claim 2, wherein the resource allocation metrics comprise total usage time of the resource; and/or
wherein the resource allocation metrics comprise a ratio of successful allocations to total allocation requests; and/or
wherein the resource allocation metrics comprise a disparity of a time of request and an allocated time.

4. The computer apparatus of any preceding Claim, wherein the at least one processor (100) is further configured to apply a randomizer to decide if the resource allocation should be rescinded.

5. The computer apparatus of any preceding Claim, wherein the at least one processor (100) is further configured to reschedule the resource allocation for the first user.

6. A method comprising:
receiving a resource allocation request from a first user;
scheduling a resource allocation for the first user;
receiving a resource allocation request from a second user;
determining if the second user is associate with one or more resource allocation metrics below a predefined threshold;
rescinding the resource allocation for the first user; and
scheduling a resource allocation for the second user.

7. The method of Claim 6, recording resource allocation metrics for each of the first user and second user over time.

8. The method of Claim 7, wherein the resource allocation metrics comprise total usage time of the resource.

9. The method of Claim 7 or 8, wherein the resource allocation metrics comprise a ratio of successful allocations to total allocation requests; and/or
wherein the resource allocation metrics comprise a disparity of a time of request and an allocated time.

10. The method of any of Claims 6-9, applying a randomizer to decide if the resource allocation should be rescinded.

11. The method of any of Claims 6-10, rescheduling the resource allocation for the first user.

12. A resource allocation system comprising:
at least one processor (100) in data communication with a memory storing processor; executable code for configuring the at least one processor (100) to:
receive a resource allocation request from a first user;
schedule a resource allocation for the first user;
receive a resource allocation request from a second user;
determine if the second user is associate with one or more resource allocation metrics below a predefined threshold;
rescind the resource allocation for the first user; and
schedule a resource allocation for the second user.

13. The resource allocation system of Claim 12, further comprising a data storage element in data communication with the at least one processor (100), wherein the at least one processor (100) is further configured to record resource allocation metrics for each of the first user and second user over time in the data storage element.

14. The resource allocation system of Claim 13, wherein the resource allocation metrics comprise total usage time of the resource; and/or
wherein the resource allocation metrics comprise a ratio of successful allocations to total allocation requests; and/or
wherein the resource allocation metrics comprise a disparity of a time of request and an allocated time.

15. The resource allocation system of Claim 12, 13 or 14, wherein the at least one processor (100) is further configured to apply a randomizer to decide if the resource allocation should be rescinded.
